# EUROPEAN PATENT SPECIFICATION

(11) **EP 3 697 203 B1**
(45) Date of publication and mention of the grant of the patent: **20.03.2024**
(21) Application number: 18812356.6
(22) Date of filing: 18.10.2018
(51) Int. Cl.: B01D 53/58, B01D 53/78, B01D 53/84, A01K 1/00, B01D 53/77, B01D 47/02

(54) **FILTER SYSTEM, INSTALLATION SUCH AS AN ANIMAL ACCOMMODATION PROVIDED THEREWITH, AND METHOD THEREFOR**
FILTERSYSTEM, ANLAGE WIE EINE DAMIT VERSEHENE TIERUNTERKUNFT UND VERFAHREN DAFÜR
SYSTÈME DE FILTRE, INSTALLATION TELLE QU'UN LOCAL D'HÉBERGEMENT D'ANIMAUX ÉQUIPÉ DE CELUI-CI, ET PROCÉDÉ ASSOCIÉ

(30) Priority: 18.10.2017 NL 2019759
(43) Date of publication of application: 26.08.2020
(73) Proprietor: Blue Economy Systems B.V., 6860 AD Osterbeek (NL)
(72) Inventor: HAZELEGER, Pascal Willem Richard, NL-6862 AH Oosterbeek (NL); VAN HEUVEN, Klaas, NL-6862 AH Oosterbeek (NL); VAN GENNIP, Wilhelmus Nicolaas Pieter Blasius, NL-6862 AH Oosterbeek (NL); DE ZWARTE, Iman Jacob, NL-6862 AH Oosterbeek (NL); GERITS, Johannes Henricus Pierre, NL-6862 AH Oosterbeek (NL)
(74) Representative: Arnold & Siedsma
(86) International application number: PCT/NL2018/050686
(87) International publication number: WO 2019/078718

(56) References cited:
- WO-A1-2008/019686
- WO-A1-2016/144172
- US-A- 2 250 226
- US-A- 3 557 535
- US-A- 3 717 979
- US-A- 6 132 493

## Description

The invention relates to a filter system for filtering a gaseous mixture, for instance animal accommodation air, flue gas coming for instance from a manure incinerator, welding fumes, exhaust of a spray shop, exhaust of a parking garage with exhaust fumes. In the case of animal accommodation air, this is particularly air coming from animal accommodations for cattle farming which have to be ventilated. The emission of such animal accommodation air has to be filtered, inter alia to remove dust from this animal accommodation air before the outgoing air is carried to the surrounding area. This is also the case for other installations, such as manure incinerators, welding installations, spray shops, parking garages with exhaust fumes, industrial complexes with flue gases, and the like.

Conventional filter systems for installations such as animal accommodations are usually so-called air washers in which the air for cleaning is guided through a water mist. This requires a water mist to be maintained, for instance using atomizers. This forms a relatively complex system which has been found in many cases to be insufficiently effective.

NL 2014424 and WO 2016/144172 describe a filter installation provided with a container for water, a fan for guiding the animal accommodation air or other gaseous mixture through the water mass, and a filter arranged in the outlet. Practical tests with this filter installation have shown that guiding animal accommodation air through a water mass achieves a high degree of fine dust filtration relative to other conventional systems, including air washers. A considerable amount of energy is needed here in order to carry the animal accommodation air for filtering through the water mass.

US 2 250 226 discloses a suction cleaner to separate dirt, dust, etc., out of the air without the use of fabric bags. In the disclosed suction cleaner dust laden air is brought into contact with a pool of liquid and agitated therewith, the resulting spray or mist effecting a washing action on the air and aiding particularly the precipitation and removal of the extremely fine dust of the type which usually escapes through the meshes of the conventional bag type suction cleaner.

US3 717 979 discloses an anti-pollution device having a horizontal, cylindrical water filled housing connected to a pair of automotive exhaust pipes and to a pair of vertical cylindrical tubes each containing a filter medium and a propeller attached to a vertical rod passing into said filter medium. Each vertical cylindrical tube has a horizontal exhaust tube for expelling the remaining minute impurities. The exhaust fumes pass into the water filled housing and some of the impurities are removed. The partially cleaned exhaust fumes next pass into the filter medium of the vertical rods and are further cleansed. The propeller which is actuated by the air currents helps retain these fumes in the filter medium for a longer period of time before allowing same to pass out the exhaust tubes house causing greater cleansing of the fumes.

An object of the invention is to provide a filter system with which the above stated problems and drawbacks are obviated or at least reduced. This object is achieved with the filter system according claim 1.

The filter system according to the invention is provided with a housing in which is arranged a liquid container in which a liquid with a liquid surface can be provided. This liquid is in particular water. The gaseous mixture, for instance animal accommodation air, is carried by means of air displacing means, particularly one or more fans, from the installation, such as an animal accommodation, to the housing, where it is then filtered and subsequently carried to the surrounding area. The amount of dust is preferably reduced herein, whereby nuisance for the surrounding area is limited. Odour, particularly an ammonia smell, can also be reduced with a filter system according to the invention. The overall nuisance of an animal accommodation for the surrounding area hereby remains limited.

The air displacing means are preferably arranged in the outlet, whereby an underpressure is realized in the housing of the filter system during use. The gas mixture is hereby drawn in and then carried to the surrounding area. It has been found that an effective air flow can hereby be realized. Air displacing means are preferably embodied as fans. In a currently preferred embodiment the fans are embodied a so-called centrifugal fans, also referred to as radial fans.

The outlet is provided with an exit side whereby filtered air/gas mixture is carried from the housing to the surrounding area. The outlet is further provided with an entry side. In the filter system according to the invention this entry side is positioned close to the liquid surface, in particular preferably just above the liquid surface at a short distance therefrom. This distance for instance amounts to 0-25 cm, preferably 1-15 cm, more preferably 2-10 cm and most preferably about 5 cm.

According to the invention, the entry side of the outlet is provided with an air guide extending substantially parallel above the liquid surface. Having the air guide extend substantially parallel to the liquid surface, preferably at a short distance therefrom, achieves that the gas mixture is carried from the inlet, via the housing and over, and optionally partially through, the liquid mass over a certain distance before it reaches the entry side of the outlet and is discharged. The air guides are preferably formed integrally with the entry side of the outlet, or connected thereto, so that all indrawn air/gas is guided over the liquid surface. It has been found that an effective filtering can hereby be achieved which in practice can be realized in effective manner and with minimal energy consumption. This provides an effective filter system wherein atomizers, these being required in air washers, can for instance be dispensed with. With the air guides it is further possible to force the incoming gas mixture to be carried over the liquid surface over a certain distance. Depending on the distance between the air guide and the liquid surface, the dimensions of the filter system and the air flow, it is additionally possible to carry part of the gas mixture through the liquid mass and/or to create a turbulent flow in the liquid container for the purpose of further improving the filtration.

In a number of preferred embodiments the entry side is provided a short distance above the liquid surface. In alternative embodiments the entry side is provided flush with the liquid surface or a short distance below this liquid surface. Positioning the entry side close to the liquid surface in this manner has been found to enable an effective gas flow, wherein a desired filtering action is achieved.

In currently preferred embodiments the air guide guides the gas flow along, over or (partially) through the liquid, wherein the gas flow moves substantially in a horizontal direction. The air guide guides the gas flow in the direction of the outlet of the filter system, wherein in this embodiment the gas flow goes through a bend and changes from a substantially horizontal direction to a substantially vertical direction. The outlet is preferably situated on the upper side of the housing.

Two or more outlets are preferably provided in the housing. An even more effective filter system is obtained by providing a plurality of outlets for a single housing. The single housing, in which a single liquid container is provided, can here be combined with a number of outlets.

In such a currently preferred embodiment the housing comprises a container.

Three outlets are preferably provided in such a container, wherein each outlet is preferably provided with a fan for drawing in air/gas therewith. It has been found that an effective dust reduction can hereby be realized. In addition, an additional advantage of providing a container as housing is that a separate permit is usually not required. The filter system according to the invention can hereby be realized in relatively simple manner in an existing situation with an existing animal accommodation.

The container preferably also forms the housing, and thereby forms an integral part of the filter system by providing a liquid basin and air chamber. An operating pressure of 150-200 Pascal has been found realistic herein, wherein a dust reduction of about 70% or more is realized. Because a lower operating pressure is required compared to conventional systems, it is possible to apply a higher flow rate, energy-efficient fans and/or fewer fans while the capacity remains the same. This makes the filter system according to the invention cost-effective. The complexity of the filter system is further greatly reduced with the invention, whereby the risk of disruptions and standstill, among other things, is reduced. In addition, the power consumption of the filter system is considerably lower compared to conventional systems. It has further been found that the filter system according to the invention can filter both large particles and small particles, smaller than 10 µm, from the gas mixture.

An air/gas-permeable filter mat is preferably arranged in the outlet. In addition to an added filtering action, this also reduces and preferably even wholly prevents possible water displacement in the outlet. Liquid, particularly water, which is held back by the filter mat falls back into the liquid container. In addition, it is also possible for a plurality of filters or filter mats to be provided.

In an advantageous embodiment according to the invention the air guide is provided with a diameter or width which is at least two times greater than the diameter or width of the outlet.

The air guide is preferably provided with a diameter, in the case of a substantially round embodiment, or a width, in the case of a non-round embodiment, which is at least two times greater than the corresponding dimension of the throughflow area of the outlet. This achieves that the gas mixture for filtering is carried over the liquid surface over a substantial distance. This achieves that an adequate filtering is obtained.

The diameter or width of the air guide is preferably at least 2.25 or even three times greater than the diameter or width of the outlet. An even better capturing of dust is hereby achieved. Particularly in a container application an inner dimension of such a container lies in the range of 2-2.5 m, the diameter of the outlet preferably lies in the range of 0.5-1.5 m and, in the case of a round air guide, the diameter lies in the range of 1-2 m. It will otherwise be apparent that the air guide can also be given a different shape, for instance oval or rectangular.

In a currently preferred embodiment the inner dimension of a container amounts to about 2.3 m, the air outlet amounts to about 0.75 m, and the diameter of the air guide amounts to about 2.0 m. it will be apparent that other embodiments are also possible according to the invention, also depending on dimensions of the installation where the filter system is applied.

In an advantageous embodiment according to the invention the side of the air guide directed toward the liquid surface during use is provided with a profiled or shaped surface.

By providing a profiled or shaped surface a more controlled air conduction is achieved. It is thus for instance possible for the shaped, i.e. not completely flat, surface to extend partially into the liquid. This causes a further turbulence, whereby the filtering action is improved. Air channels can also be provided by profiling or shaping of the surface, whereby specific air flows are obtained, for instance a turbulent flow, and/or the length of the path travelled by the gas mixture over the liquid surface can be extended. This further improves the filtering.

In a further advantageous embodiment according to the invention the filter system comprises a height-adjusting mechanism for adjusting the height between the liquid surface and the air guide.

Making the height adjustable enables the effective space between liquid surface and the air guide to be influenced. The liquid mass can here be manipulated, whereby the liquid height changes relative to the guide and/or the air guide can be adjusted in the height. A liquid pump can be provided for the purpose of adjusting the liquid level. A cylinder which can vary a telescopic outlet pipe in the height can for instance be provided for the purpose of adjusting the guide height. It will be apparent that other embodiments are also possible. The capacity of the filter system can hereby be influenced, as well as the degree of filtering. A flexible and multi-purpose system is hereby obtained.

An effective manipulation of the gas flow is enabled particularly by the combination of adjusting the height between the liquid surface and the air guide, and the use of an air guide. The filtering action can hereby be adjusted to the specific requirement in effective manner.

In a further advantageous embodiment according to the invention the filter system further comprises a number of filter elements, these together forming a filter bed for the gas flow.

Providing filter elements can further enhance the filtering action of the filter system. The filter elements are for instance beads, screw shapes or other suitable forms, and are preferably manufactured from EPS or similar material. These elements enhance the capture of particles in the gas flow. It has been found that a type of rubbing action with a self-cleaning effect is obtained by the relative movement of these particles. The captured particles here come to lie at least largely in the liquid. This results in an effective and efficient filtering action. In addition, the effective filtering surface area is increased by the filter bed, which contributes to the filtering action.

The filter bed is preferably arranged in or on the air guide and preferably such that the filter bed as it were floats or rests on the liquid surface. In this embodiment the filter elements therefore have a buoyancy relative to the liquid. The filter elements are preferably held near the air guide using positioning elements, such as a grating, perforated plate, wire mesh and the like. This prevents the filter elements from being able to find their way into the air displacing means and for instance being discharged to the surrounding area. In addition, this can prevent the filter elements from spreading over the whole housing, which reduces the filtering action.

In a further advantageous embodiment according to the invention the filter system further comprises a swirling element arranged in the outlet and configured to create swirls in the gas flow.

By providing a swirling element swirls are created in the gas flow during use. The gas flow will hereby come into contact more frequently with the relatively wet or moist surface of a wall of the outlet, whereby remaining particles in the gas flow are filtered further from the gas flow. This further enhances the filtering action.

In a further embodiment according to the invention the filter system comprises arranged bottom elements which are provided in the liquid container.

The flow of the liquid in the liquid container can be influenced by providing bottom elements. This can further improve the result of the filtering.

In a further preferred embodiment according to the invention the filter system comprises a filter regulator configured to regulate conditions in the housing.

The filtering process can be controlled by providing a filter regulator. Use is for instance made for this purpose of an air flow meter in the inlet and sensors for measuring specific air conditions, for instance arranged in the housing for the purpose of measuring the amount of dust particles, liquid characteristics and contamination. This allows additional control of the system. The number of dust particles is preferably also measured in the outlet so that an effective feedback is brought about, followed by an optionally adjusted setting of the filter system.

In a further advantageous embodiment according to the invention the filter system comprises a liquid system configured to supply additional other liquids.

By providing a liquid system additives can be added in effective manner. This is preferably controlled using the filter regulator. The additive comprises for instance citric acid for thereby capturing ammonia in effective manner. The use of citric acid results in a safe odour reduction, which citric acid can also be discharged relatively easily after use.

In a further embodiment according to the invention the filter system comprises an atomizer.

By additionally providing an atomizer even more contact can be obtained between the liquid and the gas mixture, whereby a better filtering is achieved. Use is preferably made here of the citric acid already mentioned above instead of for instance sulphuric acid, since this citric acid is less corrosive.

The invention further relates to an installation such as an animal accommodation, manure incinerator, welding installation, spray shop, parking garage or industrial complex provided with a filter system in an embodiment according to the invention.

Such an installation provides the same effects and advantages as described for the filter system. In an advantageous embodiment according to the invention the installation is further provided with a constructed wetland filter. Using such a filter a further purification can be achieved, optionally prior to an eventual draining or discharge. Plants and/or microorganisms such as bacteria here provide for the purification in the filter. Such a filter can for instance be applied in effective manner at a relatively decentral location where space is available for the filter. The purification can hereby for instance be improved and/or costs thereof reduced. It is otherwise also possible to apply such a constructed wetland filter to so-called air washers. If desired, application of a constructed wetland filter can also take a modular form.

The invention further also relates to a method for filtering a gaseous mixture, the method comprising the steps of:
- providing a filter system in an embodiment according to the invention;
- supplying the gaseous mixture for filtering via the inlet;
- filtering the supplied gaseous mixture with the filter system; and
- discharging the filtered gaseous mixture via the outlet.

The method provides the same effects and advantages as described for the filter system and the installation such as an animal accommodation, parking garage or industrial complex.

Further advantages, features and details of the present invention will be elucidated on the basis of the following description with reference to the accompanying drawings, in which:
- figure 1 is a view of an animal accommodation provided with the filter system according to the invention;
- figures 2A-B are a top view and side view of the filter system of figure 1;
- figures 3A-G are views of the entry side of the outlet with the air guide in different embodiments according to the invention;
- figures 4A-C are views of a further embodiment according to the invention; and
- figure 5 is a schematic view of a manure processing provided with a filter system according to the invention.

The filter system will now be described in one of the possible applications, namely an animal accommodation. It will be apparent that a similar application is likewise possible in other installations, including a manure incinerator, welding installation, spray shop, parking garage (for instance aimed at exhaust fumes) and an industrial complex (for instance aimed at flue gases).

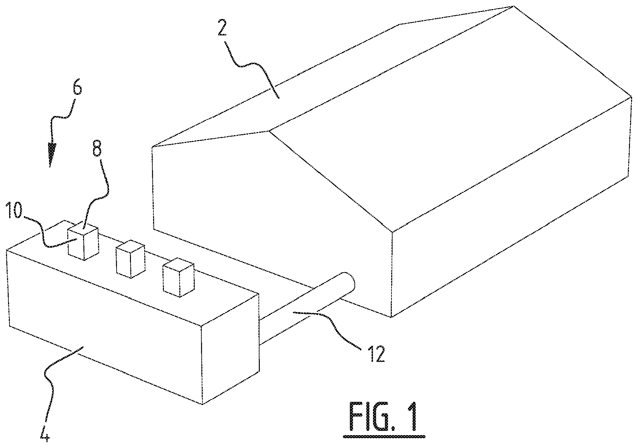

Animal accommodation 2 (figure 1) is provided with container 4 as part of filter system 6. Container 4 is provided with a number of outlets 8 which are arranged in casing 10. Inlet 12 connects animal accommodation 2 to container 4.

In the shown embodiment outlet 8 is provided in casing 10. Casing 10 is preferably provided with an insulating material in order to limit noise emission. If desired, it is possible to provide outlet 8 substantially flush with the upper side of container 4 and to provide casing 10, in which fan 14 is preferably arranged, in the interior of container 4.

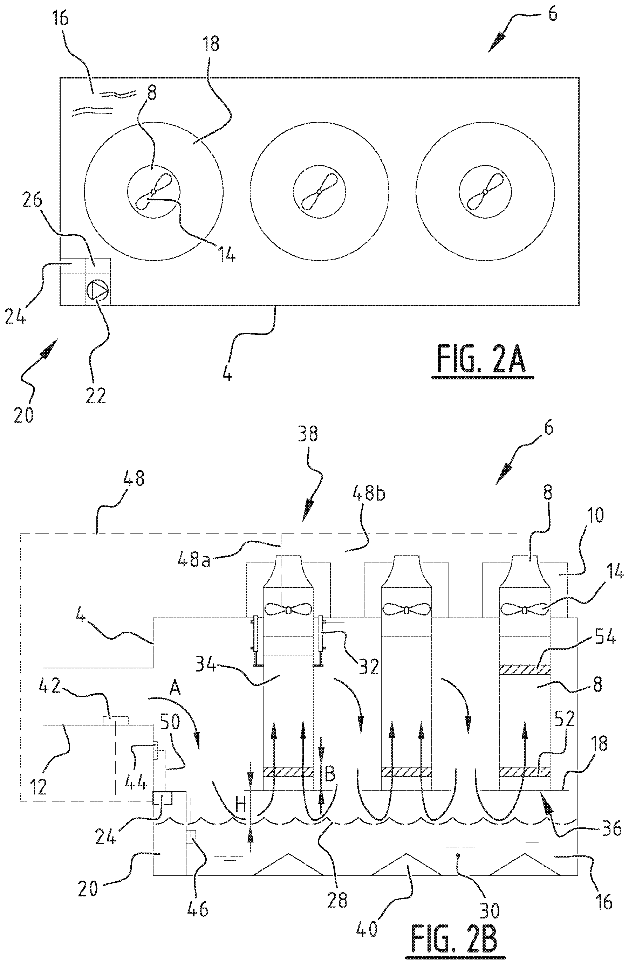

At the bottom of container 4 (figures 2A, B) liquid is provided water reservoir 16, wherein in the shown embodiment reservoir 16 extends over substantially the whole floor area of container 4. Three outlets 8 with corresponding fans 14 are further provided for an individual container 4. Ait guide 18 is provided per outlet 8. In the shown embodiment air guide 18 is embodied as a round disc. It will be apparent that other shapes, for instance oval, rectangular and the like, are also possible according to the invention.

Liquid in water reservoir 16 is supplied and/or pumped around using water system 20 comprising pump 22 and controller 24. If desired, controller 24 can carry an additive from supply container 26, via pump 22 into water reservoir 16. The liquid in liquid container or reservoir 16 can be replenished periodically and/or replenishing can be performed in continuous manner.

In the shown embodiment the underside of air guide 18 is arranged at distance H from liquid surface 28 of water mass 30 in liquid container 16 of container 4. Distance H can optionally be varied by changing the height of liquid surface 28 and/or by varying telescopic pipe part 34 of outlet 8 with entry side 36 in height direction B using cylinder system 32. Exit side 38 preferably remains at a fixed position here.

In the shown embodiment water reservoir 16 is provided with a number of profiles 40, particularly bottom profiles. The flow in liquid container 16 can hereby be influenced.

Controller 24 is preferably operatively connected to air flow meter 42, air condition meter 44 in container 4 and liquid meter 46 in liquid container 16 of container 4. Air is optionally also measured in outlet 8, and the measurement thereof is operatively connected to controller 24. Controller 24 then determines settings via control signal 48. Control signal 48a is sent to fans 14 and control signal 48b to height adjuster 32. Use is hereby made of measuring signals 50 obtained from sensors 42, 44, 46.

Air flow is drawn via inlet 12 in direction A by switching on fans 14. The air flow will then be carried to water surface 28 and then flow substantially parallel thereto over some distance for some time as a result of air guides 18. Air will then enter entry side 36 and be carried via filter mat 52, and optional additional filter element 54, in the direction of fan 14 and then be blown out via exit side 38 of outlet 8. Hereby, a large part of the dust particles remains behind in liquid mass 30 in liquid container 16 of container 4.

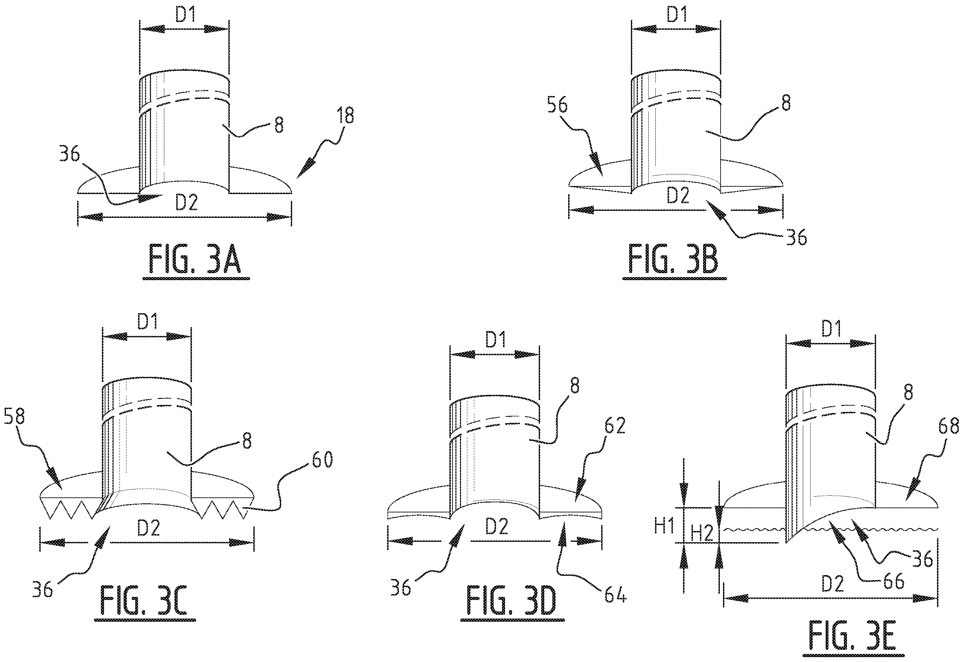

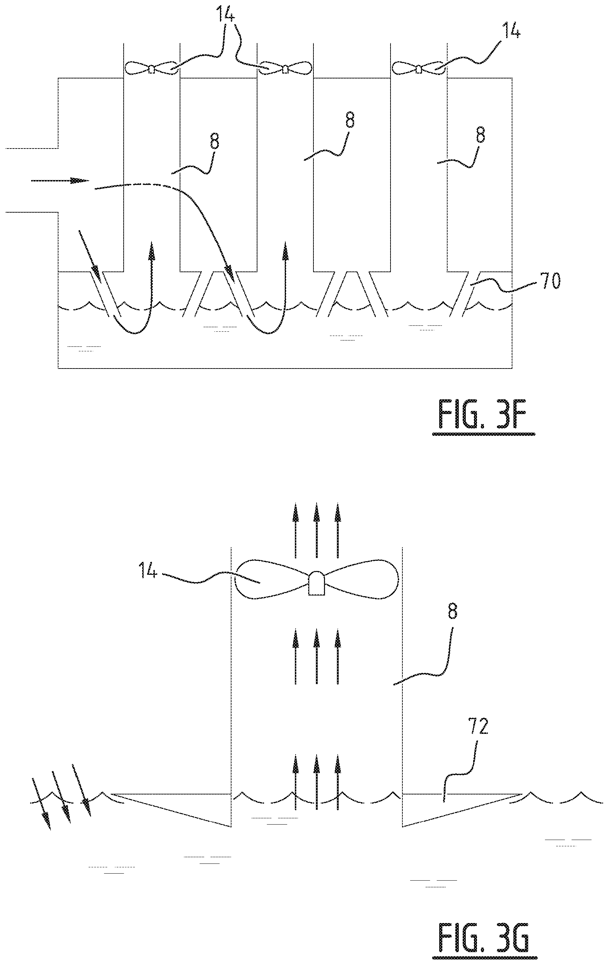

Air guide 18 (figure 3A) is for instance provided as a round disc-like element extending substantially parallel to liquid surface 28. Entry side 36 of outlet 8 is provided with diameter height D₁, and the outer diameter of guide 18 is D₂. In an alternative embodiment air guide 56 is provided with a decreasing thickness toward the periphery (figure 3B). In a further alternative embodiment air guide 58 (figure 3C) has a profiled surface provided with a type of toothing 60. A further alternative embodiment shows air guide 62 (figure 3D) wherein a curvature 64 is arranged on the side of air guide 62 directed toward liquid surface 28. In yet a further alternative embodiment entry side 36 is provided with an oblique side 66 and plate-like guide 68 (figure 3E), wherein entry side 36 can protrude partially into liquid 30 during use. Guide 70 (figure 3F), which is not encompassed by the claims, relates to a supply guide which protrudes below liquid surface 28 during use. The wholly or partially vertically placed baffles/guides 70 are optionally adjustable in height and/or incline. It is hereby possible to guide the indrawn air above and/or through the liquid and/or to alter a ratio therebetween. This makes inter alia the balance between desired degree of separation and energy consumption adjustable. Guide 72 (figure 3G) shows a round or oval guide which tapers or is conical on the downward directed side. Guide 72 is preferably height-adjustable, such that guide 72 can preferably be placed up to the top side in the liquid in order to achieve a higher degree of separation.

A further embodiment is possible wherein guide 18 is provided on the side directed downward in use with a bent edge or other kind of flange, provided that it fulfils the requirements according to claim 1. A guide can hereby be obtained in effective manner.

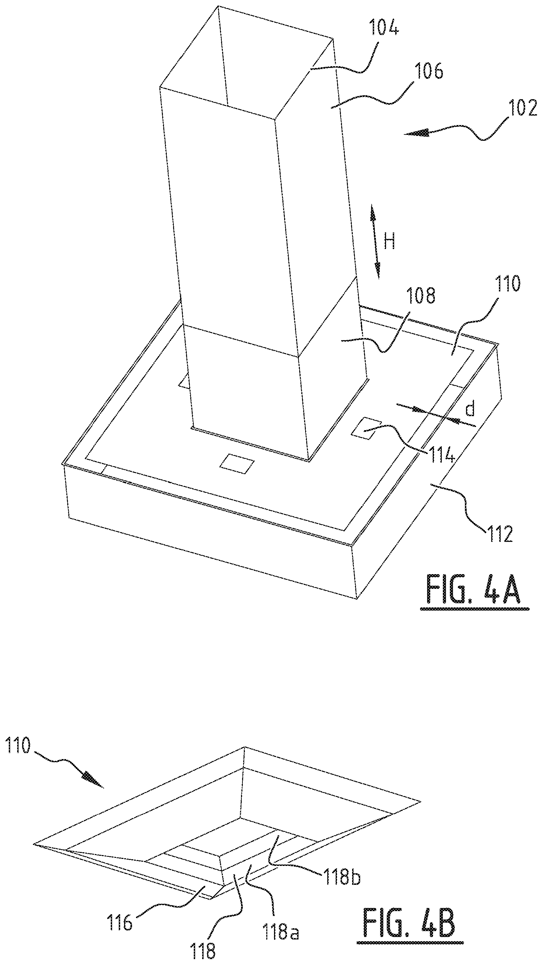

Filter system 102 (figure 4A) comprises outlet 104 consisting of fixed part 106 and adjustable part 108. Parts 106, 108 are provided for mutual telescopic adjustment in direction H. Air guide 110 is positioned above receptacle/container 112 and leaves clear a minimum edge d in the shown embodiment. Provided on guide 110 is a number of inlets 114. Inlets 114 function to introduce EPS beads or similar filter elements, for instance with a diameter of about 30 mm, into guide 110.

Guide 110 (figure 4B) is provided with oblique outer surface 116, directed downward in use, and channel wall 118. In the shown embodiment wall 118 consists of closed part 118b for retaining the filter elements, and open or perforated part 118a. Surface 116 is manufactured from a perforated plate, wherein perforations are adjusted to the dimensions of the filter elements.

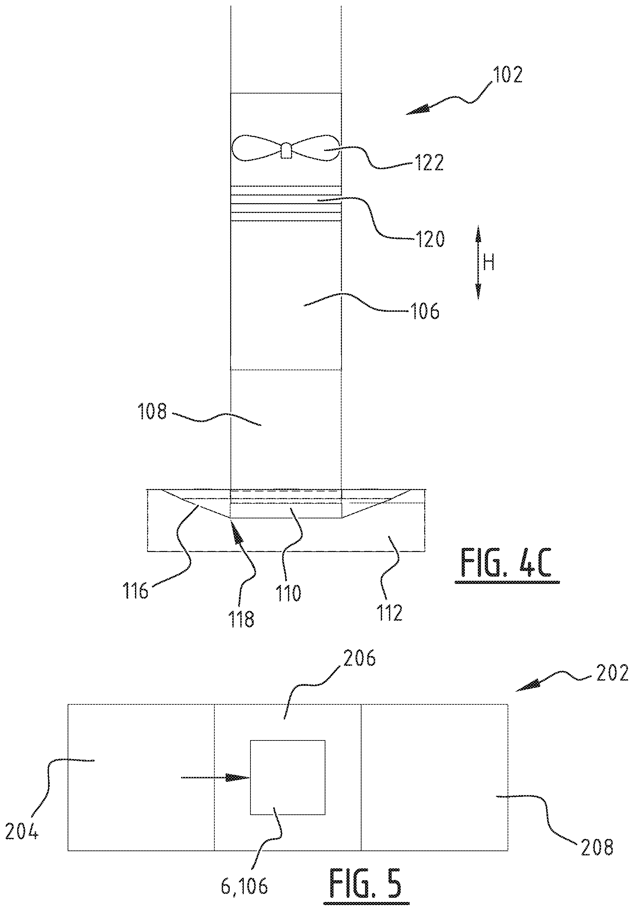

In the shown embodiment filter system 102 (figure 4C) is provided with a height of about 3 metres, wherein adjustable part 108 is telescopically slidable in or over fixed part 106 in direction H over a distance of about 1 metre. It will be apparent that other dimensions are likewise possible. Filter system 102 is further provided with swirling element 120 in a screw-shaped embodiment, placed upstream of fan 122 as seen in flow direction. It will be apparent herein that other elements and forms are also possible.

It will be apparent that measures and components of filter systems 6, 102 can be applied in combination with each other. It is thus for instance possible to apply swirling element 120 in filter system 6, and guides in the different embodiments shown for filter system 6 also in filter system 102, and vice versa. This also applies to other components.

In the shown embodiment manure incinerator 202 (figure 5) is provided with three steps: incineration in incinerating installation 204, filtering in filter system 6, 102 placed in filter space 206, and after-treatment in after-treatment space 208. It has been found that application of filter system 6, 102 in manure incinerator 202 enables an effective and efficient manure incineration.

The present invention is by no means limited to the above described preferred embodiments thereof. The rights sought are defined by the following claims, within the scope of which many modifications can be envisaged.

## Claims

1. Filter system (6) for filtering a gaseous mixture, the filter system (6) comprising:
- a housing (4) provided with an inlet (12) for supplying the gaseous mixture for filtering and an outlet (8) for discharging the filtered gaseous mixture;
- a liquid container (16) arranged in the housing (4) and configured to hold a liquid (30) with a liquid surface (28) therein; and
- air displacing means (14) configured to carry the gaseous mixture for filtering via the inlet (12) and substantially along the liquid (30) during use and to discharge the filtered gaseous mixture via the outlet (8),
wherein the outlet (8) is provided with an exit side for discharging the filtered gaseous mixture out of the housing (4) and an entry side (36) close to the liquid surface (28), wherein the entry side (36) of the outlet (8) is further provided with an air guide (18, 110) **characterized in that** the air guide (18, 110) is connected to the entry side (36) of the outlet (8) and extends substantially parallel to the liquid surface (28), wherein the air guide (18, 110) is configured to guide the gas flow along or over the liquid (30) in a substantially horizontal direction over a predetermined distance before it reaches the entry side (36) of the outlet (8).

2. Filter system (6) as claimed in claim 1, wherein two or more outlets (8) are provided in the housing (4).

3. Filter system (6) as claimed in claim 1 or 2, wherein the housing (4) is a container (4).

4. Filter system (6) as claimed in claim 1, 2 or 3, wherein the air guide (18, 110) is provided with a diameter (D2) or width (D2) which is at least two times greater than the diameter (D1) or width (D1) of the outlet (8), wherein the diameter (D2) or width (D2) of the air guide (18, 110) is preferably at least three times greater than the diameter (D1) or width (D1) of the outlet (8).

5. Filter system (6) as claimed in any one of the foregoing claims, wherein the side of the air guide (56, 58, 62, 72) directed toward the liquid surface during use is provided with a profiled or shaped surface (60, 64, 68), wherein the profiled or shaped surface preferably comprises air channels, and/or wherein the profiled or shaped surface (60, 64, 68) preferably extends partially into the liquid.

6. Filter system (6) as claimed in any one of the foregoing claims, further comprising a height-adjusting mechanism (34, 108) for adjusting the height between the liquid surface (28) and the air guide (18, 110).

7. Filter system (6) as claimed in any one of the foregoing claims, further comprising a number of filter elements, these together forming a filter bed for the gas flow, wherein the filter bed is preferably arranged in or on the air guide.

8. Filter system (6) as claimed in any one of the foregoing claims, further comprising a swirling element (120) arranged in the outlet (8) and configured to create swirls in the gas flow.

9. Filter system (6) as claimed in any one of the foregoing claims, further comprising bottom elements (260) arranged in the liquid container (16).

10. Filter system (6) as claimed in any one of the foregoing claims, further comprising a filter regulator configured to regulate conditions in the housing.

11. Filter system (6) as claimed in any one of the foregoing claims, further comprising a liquid system configured to supply additives to the liquid, wherein the additive preferably comprises a quantity of citric acid.

12. Filter system (6) as claimed in claim 11, further comprising an atomizer.

13. Installation such as an animal accommodation (202), manure incinerator (202), welding installation (202), spray shop (202), parking garage (202) or industrial complex (202) provided with a filter system (6) as claimed in one or more of the foregoing claims.

14. Installation as claimed in claim 13, further comprising a constructed wetland filter.

15. Method for filtering a gaseous mixture, comprising the steps of:
- providing a filter system (6) as claimed in any one of the claims 1-14;
- supplying the gaseous mixture for filtering via the inlet;
- filtering the supplied gaseous mixture with the filter system; and
- discharging the filtered gaseous mixture via the outlet.

## Patentansprüche

1. Filtersystem (6) zum Filtern eines gasförmigen Gemisches, das Filtersystem (6) umfassend:
- ein Gehäuse (4), das mit einem Einlass (12) zum Zuführen des gasförmigen Gemisches zum Filtern und einem Auslass (8) zum Abführen des gefilterten gasförmigen Gemischs versehen ist;
- einen Flüssigkeitsbehälter (16), der in dem Gehäuse (4) angeordnet und konfiguriert ist, um eine Flüssigkeit (30) mit einer Flüssigkeitsoberfläche (28) darin zu halten; und
- Luftverdrängungsmittel (14), die konfiguriert sind, um das gasförmige Gemisch zum Filtern über den Einlass (12) und im Wesentlichen entlang der Flüssigkeit (30) während einer Verwendung zu tragen und das gefilterte gasförmige Gemisch über den Auslass (8) abzuführen,
wobei der Auslass (8) mit einer Austrittsseite zum Abführen des gefilterten gasförmigen Gemisches aus dem Gehäuse (4) und einer Eintrittsseite (36) nahe der Flüssigkeitsoberfläche (28) versehen ist, wobei die Eingangsseite (36) des Auslasses (8) ferner mit einer Luftführung (18, 110) versehen ist,
**dadurch gekennzeichnet, dass** die Luftführung (18, 110) mit der Eingangsseite (36) des Auslasses (8) verbunden ist und sich im Wesentlichen parallel zu der Flüssigkeitsoberfläche (28) erstreckt, wobei die Luftführung (18, 110) konfiguriert ist, um den Gasstrom entlang oder über der Flüssigkeit (30) in einer im Wesentlichen horizontalen Richtung über einen vorbestimmten Abstand zu führen, bevor er die Eintrittsseite (36) des Auslasses (8) erreicht.

2. Filtersystem (6) nach Anspruch 1, wobei zwei oder mehr Auslässe (8) in dem Gehäuse (4) bereitgestellt sind.

3. Filtersystem (6) nach Anspruch 1 oder 2, wobei das Gehäuse (4) ein Behälter (4) ist.

4. Filtersystem (6) nach Anspruch 1, 2 oder 3, wobei die Luftführung (18, 110) mit einem Durchmesser (D2) oder einer Breite (D2) versehen ist, die mindestens zweimal größer ist als der Durchmesser (D1) oder die Breite (D1) des Auslasses (8) ist, wobei der Durchmesser (D2) oder die Breite (D2) der Luftführung (18, 110) vorzugsweise mindestens dreimal größer als der Durchmesser (D1) oder die Breite (D1) des Auslasses (8) ist.

5. Filtersystem (6) nach einem der vorstehenden Ansprüche, wobei die Seite der Luftführung (56, 58, 62, 72), die während der Verwendung zu der Flüssigkeitsoberfläche hin gerichtet ist, mit einer profilierten oder geformten Oberfläche (60, 64, 68) versehen ist, wobei die profilierte oder geformte Oberfläche vorzugsweise Luftkanäle umfasst, und/oder wobei sich die profilierte oder geformte Oberfläche (60, 64, 68) vorzugsweise teilweise in die Flüssigkeit erstreckt.

6. Filtersystem (6) nach einem der vorstehenden Ansprüche, ferner umfassend einen Höheneinstellmechanismus (34, 108) zum Einstellen der Höhe zwischen der Flüssigkeitsoberfläche (28) und der Luftführung (18, 110).

7. Filtersystem (6) nach einem der vorstehenden Ansprüche, ferner umfassend eine Anzahl von Filterelementen, die zusammen ein Filterbett für den Gasstrom bilden, wobei das Filterbett vorzugsweise in oder an der Luftführung angeordnet ist.

8. Filtersystem (6) nach einem der vorstehenden Ansprüche, ferner umfassend ein Wirbelelement (120), das in dem Auslass (8) angeordnet und konfiguriert ist, um Wirbel in dem Gasstrom zu erzeugen.

9. Filtersystem (6) nach einem der vorstehenden Ansprüche, ferner umfassend Bodenelemente (260), die in dem Flüssigkeitsbehälter (16) angeordnet sind.

10. Filtersystem (6) nach einem der vorstehenden Ansprüche, ferner umfassend einen Filterregler, der konfiguriert ist, um Bedingungen in dem Gehäuse zu regeln.

11. Filtersystem (6) nach einem der vorstehenden Ansprüche, ferner umfassend ein Flüssigkeitssystem, das konfiguriert ist, um der Flüssigkeit Zusätze zuzuführen, wobei der Zusatz vorzugsweise eine Menge an Zitronensäure umfasst.

12. Filtersystem (6) nach Anspruch 11, ferner umfassend einen Zerstäuber.

13. Anlage, wie eine Tierunterkunft (202), eine Mistverbrennungsanlage (202), eine Schweißanlage (202), eine Sprühanlage (202), ein Parkhaus (202) oder ein Industriekomplex (202), die mit einem Filtersystem (6) nach einem oder mehreren der vorstehenden Ansprüche versehen sind.

14. Installation nach Anspruch 13, ferner umfassend einen konstruierten Nasslandfilter.

15. Verfahren zum Filtern eines gasförmigen Gemisches, umfassend die Schritte:
- Bereitstellen eines Filtersystems (6) nach einem der Ansprüche 1 bis 14;
- Zuführen des gasförmigen Gemisches zum Filtern über den Einlass;
- Filtern des zugeführten gasförmigen Gemisches mit dem Filtersystem; und
- Abführen des gefilterten gasförmigen Gemisches über den Auslass.

## Revendications

1. Système de filtre (6) permettant de filtrer un mélange gazeux, le système de filtre (6) comprenant :
- un boîtier (4) pourvu d'un orifice d'entrée (12) pour apporter le mélange gazeux à filtrer et d'un orifice de sortie (8) permettant de décharger le mélange gazeux filtré ;
- un récipient de liquide (16) agencé dans le boîtier (4) et conçu pour contenir un liquide (30) avec une surface liquide (28) à l'intérieur de celui-ci ; et
- un moyen de déplacement d'air (14) conçu pour transporter le mélange gazeux à filtrer par le biais de l'orifice d'entrée (12) et sensiblement le long du liquide (30) pendant l'utilisation et pour décharger le mélange gazeux filtré par le biais de l'orifice de sortie (8),
dans lequel l'orifice de sortie (8) est pourvu d'un côté sortie pour décharger le mélange gazeux filtré hors du boîtier (4) et un côté entrée (36) à proximité de la surface liquide (28), dans lequel le côté entrée (36) de l'orifice de sortie (8) est en outre pourvu d'un guide d'air (18, 110) **caractérisé en ce que** le guide d'air (18, 110) est relié au côté entrée (36) de l'orifice de sortie (8) et s'étend sensiblement parallèlement à la surface de liquide (28), dans lequel le guide d'air (18, 110) est conçu pour guider le flux gazeux le long du liquide (30) ou sur celui-ci dans une direction sensiblement horizontale sur une distance prédéterminée avant qu'il atteigne le côté entrée (36) de l'orifice de sortie (8).

2. Système de filtre (6) selon la revendication 1, dans lequel au moins deux orifices de sorties (8) sont prévus dans le boîtier (4).

3. Système de filtre (6) selon la revendication 1 ou 2, dans lequel le boîtier (4) est un récipient (4).

4. Système de filtre (6) selon la revendication 1, 2 ou 3, dans lequel le guide d'air (18, 110) est prévu avec un diamètre (D2) ou une largeur (D2) qui est au moins deux fois supérieur au diamètre (D1) ou à la largeur (D1) de l'orifice de sortie (8), dans lequel le diamètre (D2) ou la largeur (D2) du guide d'air (18, 110) est de préférence au moins trois fois supérieur au diamètre (D1) ou à la largeur (D1) de l'orifice de sortie (8).

5. Système de filtre (6) selon l'une quelconque des revendications précédentes, dans lequel le côté du guide d'air (56, 58, 62, 72) dirigé vers la surface liquide pendant l'utilisation est pourvu d'une surface profilée ou façonnée (60, 64, 68), dans lequel la surface profilée ou façonnée comprend de préférence des canaux d'air, et/ou dans lequel la surface profilée ou façonnée (60, 64, 68) s'étend de préférence partiellement dans le liquide.

6. Système de filtre (6) selon l'une quelconque des revendications précédentes, comprenant en outre un mécanisme d'ajustement de hauteur (34, 108) pour ajuster la hauteur entre la surface liquide (28) et le guide d'air (18, 110).

7. Système de filtre (6) selon l'une quelconque des revendications précédentes, comprenant en outre un nombre d'éléments filtrants, ceux-ci formant ensemble un lit filtrant pour le flux gazeux, dans lequel le lit filtrant est de préférence disposé dans le guide d'air ou sur celui-ci.

8. Système de filtre (6) selon l'une quelconque des revendications précédentes, comprenant en outre un élément de tourbillonnement (120) agencé dans l'orifice de sortie (8) et conçu pour créer des tourbillons dans le flux gazeux.

9. Système de filtre (6) selon l'une quelconque des revendications précédentes, comprenant en outre des éléments de fond (260) agencés dans le récipient de liquide (16).

10. Système de filtre (6) selon l'une quelconque des revendications précédentes, comprenant en outre un régulateur de filtre conçu pour réguler des conditions dans le boîtier.

11. Système de filtre (6) selon l'une quelconque des revendications précédentes, comprenant en outre un système liquide configuré pour apporter des additifs au liquide, dans lequel l'additif comprend de préférence une quantité d'acide citrique.

12. Système de filtre (6) selon la revendication 11, comprenant en outre un atomiseur.

13. Installation telle qu'un logement d'animal (202), un incinérateur de fumier (202), une installation de soudage (202), un atelier de pulvérisation (202), un parc de stationnement (202) ou un complexe industriel (202) pourvu d'un système de filtre (6) selon une ou plusieurs des revendications précédentes.

14. Installation selon la revendication 13, comprenant en outre un filtre de marais artificiel.

15. Procédé de filtration d'un mélange gazeux, comprenant les étapes consistant à :
- fournir un système de filtre (6), selon l'une quelconque des revendications 1 à 14 ;
- apporter le mélange gazeux à filtrer par le biais de l'orifice d'entrée ;
- filtrer le mélange gazeux apporté avec le système de filtre ; et
- décharger le mélange gazeux filtré par le biais de l'orifice de sortie.
